Europäisches Patentamt

European Patent Office

Office européen des brevets

(11) Publication number: 0 413 556 A2

# EUROPEAN PATENT APPLICATION

(21) Application number: 90308927.4

(51) Int. Cl.5: G06F 9/44

(22) Date of filing: 14.08.90

(30) Priority: 15.08.89 US 394618

(43) Date of publication of application:
20.02.91 Bulletin 91/08

(84) Designated Contracting States:
AT BE CH DE DK ES FR GB IT LI LU NL SE

(71) Applicant: INTELLUTION INC
315 Norwood Park South
Norwood, Massachusetts 02062(US)

(72) Inventor: Chisholm, Alpin C.

25 Redcoat Lane
Plainville, Massachusetts 02762(US)
Inventor: Nelson, David W.
88 High Street
Mansfield, Massachusetts 02048(US)

(74) Representative: Deans, Michael John Percy et
al
Lloyd Wise, Tregear & CO. Norman House
105-109 Strand
London WC2R OAE(GB)

(54) Organising text strings.

(57) A set of text strings, stored in ASCII format, are organized for use in binary format by a program that is executed in a data processing system by translating, prior to executing the program, the set of text strings from ASCII format into a corresponding set of binary structures that represent the set of text strings; the binary structures are stored prior to executing the program in a directory that is accessible by the program, whereby during execution the program obtains the binary structures for use without having to translate the ASCII format into binary format.

FIG.1

EP 0 413 556 A2

# ORGANISING TEXT STRINGS

This invention relates to organising text strings. More particularly, but not necessarily exclusively, it is concerned with data processing systems and applications programs which respond to text strings entered by users in multiple languages (e.g., English, Spanish, etc.) and provide text string outputs (e.g., in the form of menus, messages, etc.) in corresponding languages.

Application programs respond to and generate several different types of text strings. For example, text strings entered by the user (such as "YES") are assigned values (such as logic 1) by a dictionary for use during execution, menus containing one or more text strings are displayed to the user at different points during execution of the application, and text string messages (e.g., "ERROR") are generated and provided to the user when necessary. An application program that uses text strings in a single language (e.g., English) typically has the text strings "hard coded" into the application. That is, the English text strings are embedded in the source code itself.

One known way to adapt the application program for use with text strings in other languages is to search the source code and substitute a corresponding foreign language text string for each English text string.

In some data processing systems, the application program includes constants in place of the actual text strings, and an ASCII text file stored in the data processing system relates the constants to the text strings. The text strings are stored in the file in ASCII format.

One general aspect of the invention is organizing a set of text strings, stored in ASCII format, for use in binary format by a program that is executed in a data processing system by translating, prior to executing the program, the set of text strings from ASCII format into a corresponding set of binary structures that represent the set of text strings; the binary structures are stored prior to executing the program in a directory that is accessible by the program, whereby during execution the program obtains the binary structures for use without having to translate the ASCII format into binary format.

Because the text strings are organized into the form in which they are usable by the program (i.e., binary structures) during preprocessing before the program is actually executed, the program (including any subroutines called by the program to obtain and/or use the text strings) is freed from the task of translating the text strings from ASCII to binary at runtime. As a result, the speed of the program in responding to text strings entered by the user and generating text strings for display to the user (i.e., in the form of menus and messages) is significantly increased.

Preferred embodiments include the following features.

A set of text strings is included for each one of a plurality of languages (e.g., English, Spanish, etc.), and each set of text strings is stored in one or more ASCII files in ASCII format; each set of text strings is translated prior to execution of the program into a corresponding set of binary structures that represent that set of text strings in one of the languages, and the sets of binary structures are stored in separate directories, each of which corresponds to one of the languages. During execution, whenever the program needs to use a text string, it accesses the directory that corresponds to the language with which the program has been selected for use. The selection is made by a user prior to execution (i.e., runtime).

A plurality of different types of text strings are used, and the binary structures that represent the text strings of a given type are stored n a single file in the directory. One type of text string is a dictionary item, that is, an item in which a text string (e.g., the word "YES") is assigned a value (e.g., a logic 1). Another type is a menu item, in which a set of choices are displayed to a user for selection. Message items, such as "ERROR", generated during execution are yet another type of text string.

The text strings of at least one type (e.g., message items) are of a kind that is identified in the program by symbols. A text string of this type is stored in an ASCII file that contains the text string, its symbol, and a number identifying the text string; the symbol and the number are copied from the ASCII file into a separate file (which is preferably also an ASCII file) that is accessible by the program during execution, whereby during execution the program obtains the binary structure of the text string by accessing the separate file to find the number of the text string based on its symbol, and then using the number as a index into the directory to locate the binary structure.

Other features and advantages of the invention may become apparent from the following description, and from the claims.

Description of the Preferred Embodiment

We first briefly describe the drawings.

Fig. 1 is a functional block diagram illustrating the structure and components a digital data processing system according to the present invention.

Figs. 2-5 show dictionary ASCII definition files (ADFs) used by the system of Fig. 1.

Figs. 6-8 show dictionary overlay files from which the dictionary ADFs are translated according to the invention.

Figs. 9-12 show menu ADFs used by the system of Fig. 1.

Figs. 13-15 show the menu overlay files from which the menu ADFs are translated according to the invention.

Figs. 16-17 show the message ADFs used by the system of Fig. 1.

Figs. 18-19 show the header files to which portions of the message ADFs are copied.

Figs. 20-22 show the message overlay files from which the message ADFs are translated according to the invention.

Structure and Operation

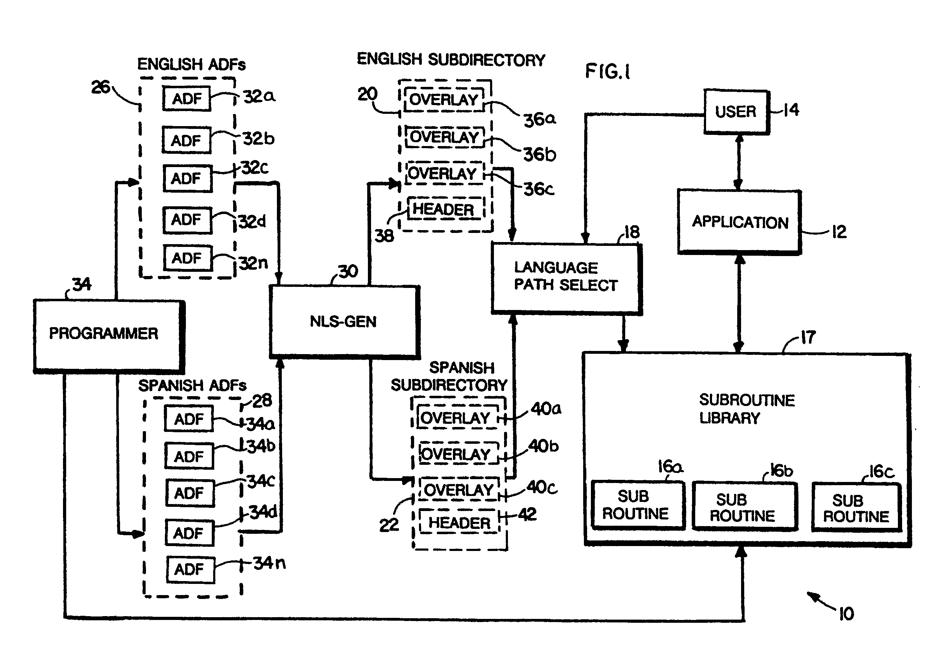

Referring to Fig. 1, a digital data processing system 10 running under an operating system, e.g., DOS, executes an application module 12 invoked by a user 14. The application module 12 responds to and generates a number of types of text strings, e.g., dictionary items, menu items, and message items, each concerning a different aspect of user input and system output to be described later in the specification, by using subroutines 16a-16c stored in a subroutine library 17. Each of the subroutines 16a-16c operates on a different type of text string. For example, subroutine 16a operates on dictionary items, subroutine 16b operates on menu items, and subroutine 16c operates on message items:

Via the subroutines 16a-16c, the application 12 responds to and generates text strings in any one of a number of languages, e.g., English, Spanish, etc. The user 14 selects the language to be used for the text strings when invoking the application 12, and this establishes a language path 18 that the subroutines 16a-16c use in operating on the text strings.

The text strings for each language are stored as binary structures (in system memory such as on a hard disk drive) in a subdirectory that corresponds to the language, rather than being "hard coded" in application 12 or in the application subroutines 16a-16c. For example, English text strings are stored in an English subdirectory 20 and Spanish text strings are stored in a Spanish subdirectory 22.

There are as many subdirectories as there are languages of text stings supported by system 10. The subroutines 16a-16c called by the application 12 operate on, e.g., retrieve, text strings from the subdirectory corresponding to the language path 18 that was selected by the user 14 when invoking, i.e., booting, application 12. For example, if the user selects English as the language path 18, subroutines 16a-16c operate on English text strings from the English subdirectory 20. Later, if the same user or a subsequent user 14 wants to change languages, he re-invokes the application 12 and selects a different language path 18, e.g., Spanish. The application still calls the subroutines 16a-16c as before; however, the subroutines operate on text strings from a different subdirectory, i.e., the Spanish subdirectory 22.

As a programmer 24 creates the subroutines 16a-16c in the subroutine library 17, he also creates a set of ASCII Definition Files (ADFs) in one language, e.g., a set of English ADFs 26 comprising ADFs 32a-32n. Then, in order to support multiple languages, the programmer 24 creates additional sets of ADFs, e.g., a set of Spanish ADFs 28 comprising ADFs 34a-34n, by copying English ADFs 26 to a second set of ADFs, e.g., the Spanish ADFs 28, and translating the text strings of the first set to text strings in the language of the second set.

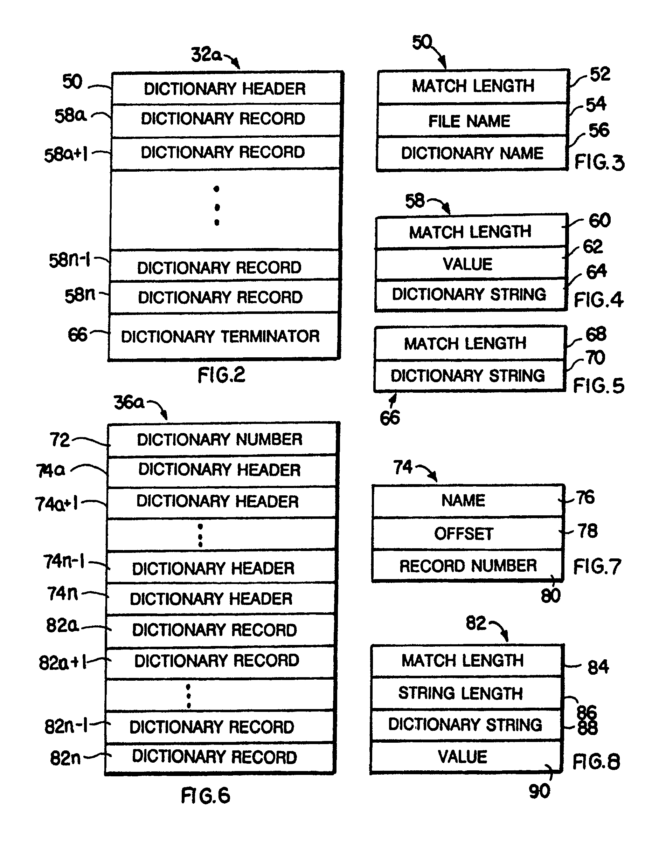

Each ADF, regardless of its language, concerns one type of text string, i.e., dictionary items, menu items, or message items. Therefore, within each set of ADFs there are several types of ADFs, such as dictionary ADFs, menu ADFS, and message ADFs. Each set of ADFs contains one message ADF and any number and combination of dictionary and menu ADFs. For example, the English ADF set 26 includes two dictionary ADFS 32a and 32b, two menu ADFs 32c and 32d, and one message ADF 32n. Similarly, the Spanish ADF set 28 includes two dictionary ADFs 34a and 34b, two menu ADFs 34c and 34d, and one message ADF 34n. Detailed descriptions of the structure of each type of ADF are provided in connection with Figs. 2-5, 9-12, and 16-17.

Once one or more ADFs have been defined, the programmer 24 submits the set to a National Language Support Generator module (NLS__GEN) 30. In response, NLS__GEN 22 creates a set of overlay files for each language and places them in a corresponding subdirectory. For example, NLS__GEN 30 creates overlay files 36a-36c in the English subdirectory 20 that correspond to the ADFs 32a-32n in the English ADF set 26.

As with the ADFs 32a-32n, the overlay files 36a-36c concern text strings of one type only, e.g., dictionary overlay files, menu overlay files, and message overlay files. However, multiple ADFs of the same type are combined into one overlay file. For example, information from dictionary ADFs 32a and 32b in the English ADF set 26 is combined and placed into the dictionary overlay file 36a in the English subdirectory 20. Likewise, information from menu files 32c and 32d in the English ADF set 26 is combined and placed in the menu overlay file 36b in the English subdirectory 20, and information in the message file 32n of the English ADF set 26 is placed into the message overlay file 36c in the English subdirectory 20. In addition, for reasons described below, NLS_GEN 30 creates a header file 38 containing symbol definitions for the message items in the message ADF 32n. Other sets of ADFs, e.g., the Spanish ADF set 28, are likewise submitted to NLS_GEN and result in corresponding overlay files (such as overlay files 40a-40c) and a header file (e.g., header file 42) in corresponding subdirectories (e.g., Spanish subdirectory 22).

For each set of ADFs submitted, NLS_GEN 30 also translates the ASCII text strings in the ADFs, e.g., dictionary items in dictionary ADFs 32a and 32b, into binary structures in the corresponding overlay files, e.g., dictionary overlay file 36a. As a result, the subroutines 16a-16c need not translate the ASCII text strings to binary strings at runtime, and the speed with which the subroutines are able to operate on the text strings is increased.

Detailed descriptions of the structure of each type of overlay file, i.e., dictionary overlay files, menu overlay files, message overlay files, and message header files are provided in connection with Figs. 6-8, 13-15, and 18-20.

Dictionary Items

A dictionary is a set of items available to the user 14 or to the application subroutine 16a which operates on dictionary items. For example, one dictionary might contain the items "YES", "NO", and "QUIT", which are entered by the user 14. Another dictionary might contain the items "ENABLE" and "DISABLE", which are operated on by the subroutine 16a. Associated with each dictionary item is a value, e.g., logic 1, logic 0, or a hexadecimal value, which the subroutine 16a uses in its operations.

The use of the subroutine 16a to operate on dictionary items in dictionary overlay files (for example, dictionary overlay file 36a shown in Fig. 1) provides several advantages. For example, an application 12 typically supports a large number of dictionaries, each having one or more dictionary items. However, because the subroutine 16a might need access to only a few of the supported dictionaries, the subroutine 16a loads dictionaries from the dictionary overlay file 36a only as it needs them, which increases the speed with which the application 12 completes its operations.

Similarly, the subroutine 16a loads a dictionary from the dictionary overlay file 36a once, sets a flag which indicates that the dictionary has been loaded, and uses the loaded dictionary throughout its processing, which also increases the speed with which the application 12 completes its operations.

And, finally, in order to minimize storage requirements, a number of dictionaries, each stored in a separate dictionary ADF, e.g, dictionary ADF 32a and dictionary ADF 32b in the English ADF set 26 (Figs 1), are stored together in a single dictionary overlay file, e.g., the dictionary overlay file 36a in the English subdirectory 20 (Fig. 1).

Referring to Figs. 2 and 3, a dictionary ADF (for example the dictionary ADF 32a in Fig. 1) identifies a dictionary for the application 12. The dictionary ADF 32a includes a dictionary header 50 shown in Fig. 3 which contains several fields including a match length field 52, the contents of which identify the starting address of the dictionary in the dictionary ADF 32a, a file name field 54, the contents of which identify the DOS file name of the dictionary ADF 32a, and a dictionary name field 56, the contents which identify the name by which the subroutine 16a refers to the dictionary.

Referring also to Fig. 4, the dictionary ADF 32a also includes dictionary records 58a-58n each of which identifies a dictionary item. A dictionary record 58 contains several fields including a match length field 60, the contents of which identify the least number of characters a user or subroutine must submit in order to match the dictionary item, a value field 62, the contents of which identify the value with which the dictionary item is associated, e.g., logic 1, logic 0, or a hexadecimal value, and a dictionary string field 64, the contents of which identify the dictionary item in ASCII code.

Referring also to Fig. 5, the dictionary ADF 32a also contains a dictionary terminator 66 which identifies the end of a dictionary. The dictionary terminator 66 contains a match length field 68 (usually set to 0) and a dictionary string field 70 (usually set to null).

Referring to Fig. 6, a dictionary overlay file (for example, the dictionary overlay file 36a also shown in Fig. 1) contains a dictionary number field 72 the contents of which indicate the total number of dictionaries contained in the dictionary overlay file 36a, i.e., the number of dictionary ADFs. For example if only the dictionary ADF 32a and dictionary ADF 32b are combined in the dictionary overlay file 36a, the contents of the number field 72 are set to two.

Referring also to Fig. 7, the dictionary overlay file 36a also contains dictionary headers 74a-74n, one for each dictionary ADF 32a combined in the dictionary overlay file 36a. Successive dictionary headers 74a-74n each contain a name field 76, the contents of which are copied from the contents of the dictionary name field 56 in the dictionary header 50 in each successive dictionary ADF 32a combined into the dictionary overlay file 36a. The dictionary headers 74a-74n each also contain an offset field 78, the contents which indicate where the dictionary records for each successive dictionary header 74 begin in the dictionary overlay file 36a. The dictionary headers 74a-74n each also contain a record number field 80, the respective contents of which indicate the number of dictionary records that belong to the respective dictionary headers 74a-74n.

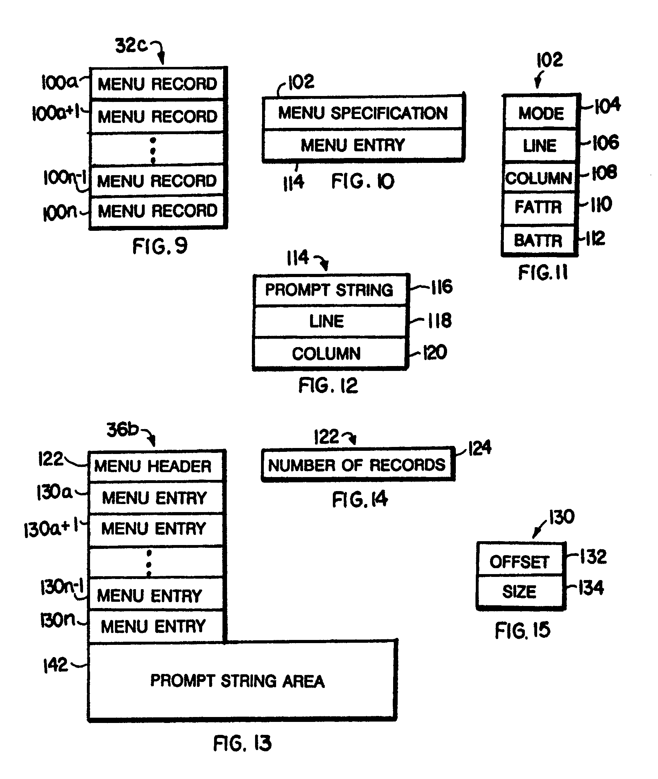

Referring also to Fig. 8, the dictionary overlay file 36a also contains an array of dictionary records 82a-82n (Fig. 6). The dictionary records 82a-82n each identify a dictionary item and contain a match length field 84, the contents of which indicate the least number of characters a user or subroutine must submit in order to match the dictionary item. For example, the match length for the dictionary item "YES" in a dictionary containing the items "YES", "NO", and "QUIT" is one, i.e., the application subroutine is able to match a user's input in a minimum of one character input, i.e., the letter "Y".

The dictionary record 82 also contains a string length field 86, the contents of which indicate how long the dictionary item is. For example, the string length for the dictionary item "YES" is three.

The dictionary record 82 also contains a dictionary string field 88, the contents of which are the string itself in binary structure which is translated from the contents of the dictionary string field 64 in the dictionary record 58 of the dictionary ADF 32a.

Finally, the dictionary record 82 also includes a value field 90, the contents of which are copied from the contents of the value field 62 in the dictionary record 58 of the dictionary ADF 32a.

Menu Items

A menu presents a user with several options, i.e., operations associated with text strings called menu items. In general, an application 12 has potentially many menus and submenus, the menu items of which are handled similarly to dictionary items, i.e., the subroutine 16b loads menus as they are needed. The programmer 24 creates a menu ADF, e.g., the menu ADF 32c shown in Fig. 1, by specifying the attributes of each menu in the menu ADF 32c and the attributes of each menu item within each menu.

Referring to Figs. 9-11, the menu ADF 32c contains menu records 100a-100n. Each of the menu records 100a-100n includes a menu specification field which in turn contains a mode field 104. The contents of the mode field 104 indicate whether the menu is to be displayed centered, relative to another menu, or in an absolute position as defined by the line and column fields. The menu specification field 102 also includes a line field 106 and a column field 108, the contents of which are used to position the menu on the display. The menu specification field 102 also includes a foreground attribute field (fattr) field 110, the contents of which indicate the foreground attributes of the menu, e.g., the foreground color used to display the menu. And finally, menu specification field 102 includes a background attribute (battr) field 112, the contents of which indicate the background attributes of the menu, e.g., the background color used to display the menu.

Referring also to Fig. 12, each of the menu records 100a-100n further includes a menu entry field 114. The menu entry field 114 includes a prompt string field 116, the contents of which are displayed as text, i.e., menu items in the menu. The menu entry field 114 also includes a line field 118 and a column field 120, the contents of which indicate where in the menu the contents of the prompt string field 116 appear.

To create a corresponding menu ADF for a different language, e.g., the menu ADF 40c in the Spanish ADF set 28 shown in Fig. 1, the programmer 24 copies the menu ADF 32c into the ADF set of each additional supported language, e.g., into the Spanish ADF set 28, and translates the contents of the prompt string field 1!6 in each menu entry record 114 to the language of the additional ADF set. The contents of other fields in the menu specification record 102 and menu entry records 114, e.g., the contents of the line and column fields 106 and 108 in the menu specification record 102 and the line and column fields 118 and 120 in the menu entry record 114, are also changed as they are affected by the translation of the contents of the prompt string fields 116. For example, if the programmer changes "YES" to "SI", the contents of the line and column fields 106 and 108 in the menu specification record 102 and the line and column fields 118 and 120 in the menu entry record 114 may need to be adjusted as well to compensate for the change in the number of characters in the menu item.

Once the programmer has defined, copied, and translated the menu ADF 32c, he submits all of the menu ADF(s) to NLS_GEN 30 which creates the corresponding menu overlay files e.g., the menu overlay file 36b in Figs 1. For example, English menu ADFs are translated to English menu overlay files 36b (Fig. 1). Likewise, NLS_GEN 30 creates Spanish menu overlay file 40b from the Spanish menu

Referring to Figs. 13 and 14, a menu overlay file, e.g., menu overlay file 36b shown in Fig. 1, contains a menu header record 122. The menu header record includes a number of records field 124, the contents of which indicate the number of menu items are stored in the menu overlay file 36b.

Referring to Fig. 15, the menu overlay file 36b also contains menu entry records 130a-130n. Each menu entry record 130 includes an offset field 132, the contents of which indicate where a menu item is located in the menu overlay file 36b. The menu entry record 130 also includes a size field 134, the contents of which indicate how long the menu item is.

The menu overlay file 36b also contains a prompt string area 142. The contents of each prompt string field 116 in each successive menu entry 114 in each menu ADF, e.g., menu ADFs 32c and 32d (Fig. 1), are written into the prompt string area 142.

When the application 12 calls the subroutine 16b to execute an operation on a menu item, it provides the subroutine with the starting address of a menu entry 130. The subroutine 16b locates a prompt string, i.e., menu item, in the prompt string area 142, by using the starting address to locate the menu entry 130 and then adding the contents of the offset field 132 in the menu entry 130 to the starting address of the menu. The contents of the size field 134 in the menu entry 130 identify the length of the menu item, and, when added to starting address of the menu item, provide the ending address of the menu item.

Message Items

A message item refers to non-dictionary or menu items, e.g., error messages. The way in which message items are organized in a message overlay file, e.g., the message overlay file 36c shown in Fig. 1, is similar to the dictionary and menu items are organized and likewise minimizes storage requirements and provides rapid access to the message items.

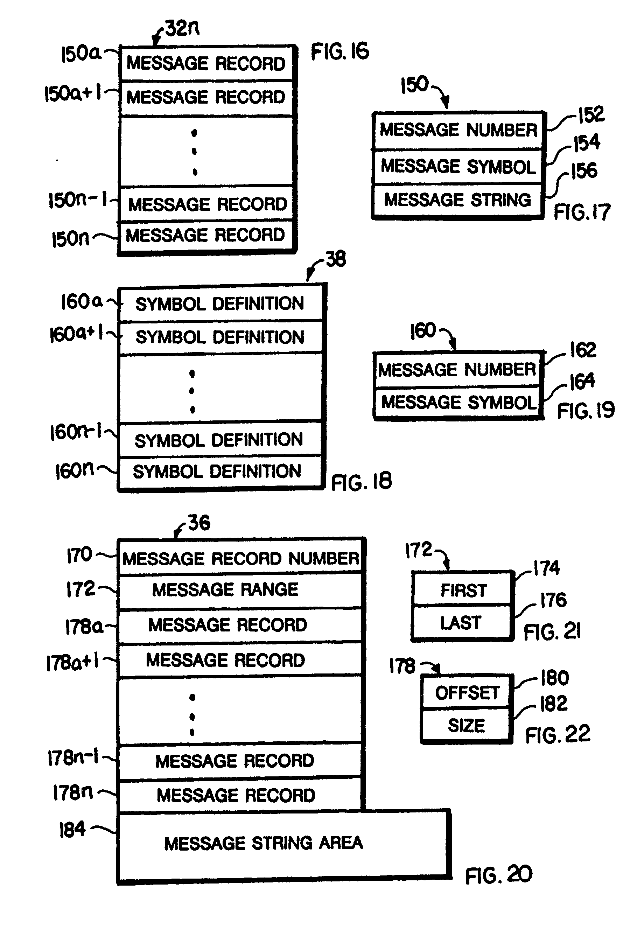

Referring to Figs. 16 and 17, the programmer 24 creates a message ADF, e.g., the message ADF 32n shown in Fig. 1. The message ADF 32n contains message records. Each message record 150 includes a message number field 152, the contents of which identify a numeric constant associated with the message item. The message record 150 also includes a message symbol field 154, the contents of which identify an alphanumeric constant associated with the message item. And, finally, the message record 150 includes a message string field 156, the contents of which identify the message item in ASCII code. For example, in a message record 150a, the message string "YES" might be stored in the message string field 156 and be associated with the numeric constant "100", which is stored in the message number field 152, and the alphanumeric symbol MESSAGE__1, which is stored in the message symbol field 154.

Once the message ADF 32n is complete, the programmer 24 copies it into the set of ADFs for each language, e.g., into the message ADF 34n in the Spanish ADF set 28 shown in Fig. 1, and translates the contents of the message string field 156 in each message record 150 to the language of that ADF set. For example, in translating English to Spanish, the contents of the message string field 156 of the message record 150a are changed from "YES" to "SI". To maintain a one to one correspondence between the message records 150 of any two message ADFs, e.g., between the message ADF 32n in the English ADF set 26 and the message ADF 34n in the Spanish ADF set 28, the contents of the message number fields 152 and message symbol fields 154 are not changed during translation.

Each message ADF, e.g, English ADF 32n, is submitted to NLS__GEN 30, which creates a header file 38 and a message overlay file 36c.

Referring to Fig. 18, the header file 38 contains symbol definitions 160a-160n, one of which is shown in Fig. 19. The contents of symbol definitions 160a-160n are copied in a one to one correspondence from the contents of message records 150a-150n into the header file 38 in a format compatible with constant declarations in a programming language, e.g., the C programming language. The header file 38 is then compiled with the application 12 to enable the constant references in the application 12, which is written in the same programming language, i.e., the C programming language.

Referring to Fig. 19, the symbol definition record 160 contains a message symbol field 162, the contents of which are copied from the contents of the message symbol field 152 in a message record 150. The symbol definition record 160 also contains a message number field 164, the contents of which are copied from the contents of the message number field 152 in the same message record 150.

Once NLS__GEN 30 has created the header file 38, NLS__GEN 30 creates the message overlay file, e.g., the message overlay file 36c shown in Fig. 1, in two passes. In the first pass, NLS__GEN 30 determines how many message records 150 there are in the message ADF 32n and allots an equal number of message records in the message overlay file 36c.

Referring to Figs. 20 and 21, the message overlay file 36c contains a message record number field 170, the contents of which indicate how many message records 150 NLS__GEN found in the message ADF 32n. The message overlay file 36c also contains a message range record 172. The message range record 172 contains a "first" field, the contents of which identify the message number of the first message record in the message overlay file 36c, and a "last" field 176, the contents of which identify the message number of the last message record in the message overlay file 36c.

Referring to Fig. 22, the message overlay file 36c also contains message records 178a-178n. Each message record 178 includes an offset field 180, the contents of which identify where in the message overlay file 36c the message item is located, e.g., the distance in bytes from the starting address of the message overlay file 36c to the starting address of the message string 156 in the message area 184. The message record 178 also includes a size field 182, the contents of which identify the length of the message item.

In the second pass, NLS__GEN 30 reads each message record 150 in the message ADF 32a and writes the contents of its message string field 156 into the message string area 184 of the overlay message file 36c. In the message string area 184, the contents of the message string fields 156 are compacted together without gaps or null characters to minimize storage requirements.

Once NLS__GEN 30 has created the message overlay file 36c, subroutine 16c in the application 12 locates a message item in the message area 184 as follows. The application 12 supplies the message symbol for the message item. The subroutine 16c locates the message symbol and subtracts the message number associated with the message symbol from the contents of the last index field 176 in the message range record 172. The result is an index into the array of message records 178a-178n. The contents of the offset field 180 of the indexed message record 178 then provide the starting point of the message item in message string area 184. The contents of the size field 182 identify how long the message item is, and thus where it ends in the message string area 184.

Other embodiments are within the following claims.

A portion of the disclosure of this patent document contains material which is subject to copyright protection. The copyright owner has no objection to the facsimile reproduction by anyone of the patent document or the patent disclosure, as it appears in the Patent Office patent file or records, but otherwise reserves all copyright rights whatsoever.

**Claims**

1. A process of organizing a set of text strings, stored in ASCII format, for use in binary format by a program that is executed in a data processing system, comprising

prior to executing said program, translating said set of text strings from said ASCII format to a corresponding set of binary structures that represent said set of text strings, and

storing said binary structures in a directory prior to executing said program, said directory being accessible by said program, whereby during execution said program obtains said binary structures for use without having to translate said ASCII format into binary format during said execution.

2. The process of claim 1 wherein there are a set of text strings for each one of a plurality of different languages, further comprising, prior to execution,

storing each one of said set of text strings in one or more ASCII file in ASCII format,

translating each one of said sets of text strings from ASCII format into a corresponding set of binary structures that represent said set of text strings in one of said languages, and

storing said sets of binary structures in separate directories, each directory corresponding to one of said languages.

3. The process of claim 2 further comprising responding to a selection of one of said languages by causing said program to access the directory that corresponds to said language whenever said program needs to use said text strings.

4. The process of claim 3 wherein said selection is made by a user prior to execution of said program.

5. The process of claim 1 wherein said set of text strings includes a plurality of different types of text strings, further comprising

storing the binary structures that represent the text strings of each type in a separate file in said directory.

6. The process of claim 5 wherein one of said types of text strings includes dictionary items.

7. The process of claim 5 wherein one of said types of text strings includes menu items.

8. The process of claim 5 wherein one of said types of text strings includes message items.

9. The process of claim 1 wherein at least one of said text strings is of a type that is identified in said program by symbol, further comprising

storing said text string in an ASCII file that contains the text string, the symbol, and a number identifying said text string, and

copying said symbol and said number from said ASCII file into a separate file that is accessible by said program during execution,

whereby during execution said program obtains said binary structure by accessing said separate file to find said number based on said symbol, and using said number as an index into said directory to locate said binary structure.

10. The process of claim 9 wherein said one text string type is a message item.

11. The process of claim 9 wherein said separate file is an ASCII file.

FIG.1

ENGLISH ADFs

26

ENGLISH SUBDIRECTORY

ADF — 32a
ADF — 32b
ADF — 32c
ADF — 32d
ADF — 32n

20

OVERLAY — 36a
OVERLAY — 36b
OVERLAY — 36c
HEADER

38

30

NLS-GEN

USER — 14

APPLICATION — 12

18

LANGUAGE PATH SELECT

34

PROGRAMMER

SPANISH ADFs

28

ADF — 34a
ADF — 34b
ADF — 34c
ADF — 34d
ADF — 34n

SPANISH SUBDIRECTORY

OVERLAY — 40a
OVERLAY — 40b
OVERLAY — 40c
HEADER — 42

22

17

SUBROUTINE LIBRARY

16a
SUB ROUTINE

16b
SUB ROUTINE

16c
SUB ROUTINE

10

EP 0 413 556 A2

**FIG.2** (32a)

| | |
|---|---|
| 50 | DICTIONARY HEADER |
| 58a | DICTIONARY RECORD |
| 58a+1 | DICTIONARY RECORD |
| ⋮ | |
| 58n-1 | DICTIONARY RECORD |
| 58n | DICTIONARY RECORD |
| 66 | DICTIONARY TERMINATOR |

FIG.2

**FIG.3** (50)

| | |
|---|---|
| MATCH LENGTH | 52 |
| FILE NAME | 54 |
| DICTIONARY NAME | 56 |

FIG.3

**FIG.4** (58)

| | |
|---|---|
| MATCH LENGTH | 60 |
| VALUE | 62 |
| DICTIONARY STRING | 64 |

FIG.4

**FIG.5**

| | |
|---|---|
| MATCH LENGTH | 68 |
| DICTIONARY STRING | 70 |

FIG.5 (66)

**FIG.6** (36a)

| | |
|---|---|
| 72 | DICTIONARY NUMBER |
| 74a | DICTIONARY HEADER |
| 74a+1 | DICTIONARY HEADER |
| ⋮ | |
| 74n-1 | DICTIONARY HEADER |
| 74n | DICTIONARY HEADER |
| 82a | DICTIONARY RECORD |
| 82a+1 | DICTIONARY RECORD |
| ⋮ | |
| 82n-1 | DICTIONARY RECORD |
| 82n | DICTIONARY RECORD |

FIG.6

**FIG.7** (74)

| | |
|---|---|
| NAME | 76 |
| OFFSET | 78 |
| RECORD NUMBER | 80 |

FIG.7

**FIG.8** (82)

| | |
|---|---|
| MATCH LENGTH | 84 |
| STRING LENGTH | 86 |
| DICTIONARY STRING | 88 |
| VALUE | 90 |

FIG.8

FIG. 9

FIG. 10

FIG. 11

FIG. 12

FIG. 13

FIG. 14

FIG. 15

_32n_

150a — | MESSAGE RECORD |   FIG. 16

150a+1 — | MESSAGE RECORD |

⋮

150n-1 — | MESSAGE RECORD |

150n — | MESSAGE RECORD |

_150_

| MESSAGE NUMBER | —152
| MESSAGE SYMBOL | —154
| MESSAGE STRING | —156

FIG. 17

_38_

160a — | SYMBOL DEFINITION |

160a+1 — | SYMBOL DEFINITION |

⋮

160n-1 — | SYMBOL DEFINITION |

160n — | SYMBOL DEFINITION |

FIG. 18

_160_

| MESSAGE NUMBER | —162
| MESSAGE SYMBOL | —164

FIG. 19

_36_

170 — | MESSAGE RECORD NUMBER |

172 — | MESSAGE RANGE |

178a — | MESSAGE RECORD |

178a+1 — | MESSAGE RECORD |

⋮

178n-1 — | MESSAGE RECORD |

178n — | MESSAGE RECORD |

184 — | MESSAGE STRING AREA |

FIG. 20

_172_

| FIRST | —174
| LAST | —176

FIG. 21

_178_

| OFFSET | —180
| SIZE | —182

FIG. 22